**Europäisches Patentamt**

**European Patent Office**

**Office européen des brevets**

(19)

(11) Veröffentlichungsnummer : **0 064 574**
**B1**

# EUROPÄISCHE PATENTSCHRIFT

(12)

(45) Veröffentlichungstag der Patentschrift : 04.05.88

(21) Anmeldenummer : 81109136.2

(22) Anmeldetag : 28.10.81

(51) Int. Cl.⁴ : **G 06 F 13/00**, G 06 F 15/16

(54) Anordnung zum Auslesen eindeutiger Informationen aus einem digitalen Schaltwerk bei zueinander asynchronen Steuersignalen für das Weiterschalten des Schaltwerkes und das Übernehmen der Informationen.

(30) Priorität : 11.05.81 DE 3118621

(43) Veröffentlichungstag der Anmeldung :
17.11.82 Patentblatt 82/46

(45) Bekanntmachung des Hinweises auf die Patenterteilung : 04.05.88 Patentblatt 88/18

(84) Benannte Vertragsstaaten :
DE FR GB IT

(56) Entgegenhaltungen :
US-A- 4 163 291

(73) Patentinhaber : Siemens Aktiengesellschaft Berlin und München
Wittelsbacherplatz 2
D-8000 München 2 (DE)

(72) Erfinder : Bromme, Irmfried, Dipl.-Ing.
Midgardstrasse 9a
D-8000 München 83 (DE)
Erfinder : Brunner, Reinhold, Dipl.-Ing.
Kafkastrasse 7a
D-8000 München 83 (DE)
Erfinder : Reimer, Heinz, Dipl.-Ing.
Bachwiesenweg 4
D-8132 Tutzing (DE)

EP 0 064 574 B1

Jouve, 18, rue St-Denis, 75001 Paris, France

## Beschreibung

Die Erfindung betrifft eine Anordnung zum Auslesen eindeutiger Informationen aus einem digitalen Schaltwerk bei zueinander asynchronen Steuersignalen für das Weiterschalten des Schaltwerkes und das Übernehmen der Informationen aus einem weiteren Schaltwerk, bestehend aus einem ersten Schaltwerk, das von einem, das erste Schaltwerk weiterschaltenden Signal beaufschlagt ist, einem Zwischenspeicher, in dem die Zustandsgrößen des ersten Schaltwerks zwischenspeicherbar sind und einem zweiten Schaltwerk, das von einem Lesesignal beaufschlagbar ist und in das die Zustandsgrößen des Zwischenspeichers übernehmbar sind.

Beim Austausch von Informationen zwischen voneinander unabhängigen digitalen Systemen, z. B. Mikroprozessoren, deren zeitliches Verhalten zueinander asynchron ist und die ohne Übernahmeanforderungs- und -quittungssignale (z. B. Strobe und Acknowledge) bzw. Übernahmeverzögerungssignale (z. B. Wait, Ready) oder ohne von einem höherfrequenten Takt gesteuerte Synchronisierschaltungen betrieben werden, treten statistisch verteilt Zeitpunkte ein, bei denen sich die Informationen im Quellsystem gerade ändern, wenn das Zielsystem die Informationen übernehmen oder auswerten soll. Dadurch werden falsche Informationen übernommen oder ausgewertet.

Dieses Problem tritt z. B. bei digitalen Schaltwerken auf, die von einem Taktsignal weitergeschaltet werden und deren Zustandsgrößen zu einem beliebigen Zeitpunkt in ein zweites digitales Schaltwerk übernommen oder von diesem mit einem Bewertungssignal ausgewertet werden sollen. Unter einem solchen Schaltwerk ist allgemein eine Anordnung zur Durchführung logischer Verknüpfungen zu verstehen, die die Fähigkeit aufweist, einzelne Variablenzustände (Zustandsgrößen) zu speichern, wie z. B. Zähler, Ablaufsteuerungen, Mikroprozessoren o. ä ...

Ursache des Problems sind die bei den digitalen Schaltelementen auftretenden, von Null verschiedenen und unterschiedlich langen Verzögerungs und Schaltzeiten für die Übergänge von Einspegel (« 1 ») nach Nullpegel (« 0 ») und von Nullpegel nach Einspegel. So verläuft z. B, bei n-Kanal-MOS-Schaltelementen der Übergang von Nullpegel nach Einspegel in der Regel langsamer als der Übergang von Einspegel nach Nullpegel.

Das Problem wurde bisher teilweise gelöst, indem zwischen dem ersten und dem zweiten Schaltwerk ein Zwischenspeicher, z. B. ein D-Flip-Flop oder ein Master-Slave-Flip-Flop, eingefügt wird, in den die Zustandsgrößen des ersten Schaltwerks während der inaktiven Zeiten des das erste Schaltwerk weiterschaltenden Taktsignals eingetragen werden und in dem während der aktiven Zeiten des das erste Schaltwerk weitergeschalteten Taktsignals die Zustandsgrößen des ersten Schaltwerks zwischengespeichert werden. Eine entsprechende Anordnung kann so ausgeführt sein, daß das das erste Schaltwerk weiterschaltende Taktsignal über einen Inverter als Übergabesignal, welches als Steuersignal bewirkt, daß die Zustandsgrößen des ersten Schaltwerkes im Zwischenspeicher übernommen werden, den Zwischenspeicher beaufschlagt.

Bei diesem Verfahren können jedoch weiterhin vom zweiten Schaltwerk falsche Informationen übernommen oder ausgewertet werden, wenn zum Beginn des Eintragens der geänderten Zustandsgrößen des ersten Schaltwerkes, die dann im ersten Schaltwerk schon statisiert sind, d. h. deren Werte bereits stabil anliegen, in den Zwischenspeicher vom zweiten Schaltwerk aus dem Zwischenspeicher gelesen wird oder sein Inhalt bewertet wird.

Eine verbesserte Lösung besteht nun darin, die Zustandsgrößen des Schaltwerkes nur dann in den Zwischenspeicher einzutragen, wenn das das erste Schaltwerk weiterschaltende Taktsignal und das das Lesen bzw. das Bewerten der Zustandsgrößen des Zwischenspeichers bewirkende Lese- bzw. Bewertungssignal des zweiten Schaltwerkes gleichzeitig inaktiv sind. Dies kann z. B. in der Weise erreicht werden, daß bei als einsaktiv angenommenen Steuersignalen die Übernahme der Zustandsgrößen des ersten Schaltwerkes in den Zwischenspeicher durch ein Übernahmesignal gesteuert wird, das am Ausgang eines eingangsseitig sowohl vom das erste Schaltwerk beaufschlagenden Taktsignal als auch vom das zweite Schaltwerk beaufschlagenden Lese-oder Bewertungssignal beaufschlagten NOR-Gatters abnehmbar ist.

Diese Lösung führt ebenfalls zu Fehlern, wenn der Abstand zwischen dem Inaktivwerden des weiterschaltenden Taktsignals und dem Aktivwerden des Lese- bzw. Bewertungssignals so kurz wird, daß eine korrekte Übernahme der Zustandsgrößen des ersten Schaltwerks in den Zwischenspeicher nicht gewährleistet ist.

Eine weitere Lösung stützt sich auf das mehrfache Lesen der Zustandsgrößen des ersten Schaltwerkes mit anschließender Überprüfung der einzelnen Lesewerte auf Gleichheit. Sind zwei zeitlich aufeinanderfolgende Lesewerte gleich, so wird angenommen, daß damit der richtige Wert vorliegt, und eine Übernahme in das zweite Schaltwerk bzw. eine Bewertung vorgenommen. Dieses Verfahren liefert nur dann ein richtiges Ergebnis, wenn das Zeitintervall zwischen zwei Impulsen des weiterschaltenden Taktes des ersten Schaltwerkes länger andauert als das für die notwendigen Lese- oder Überprüfungsoperationen erforderliche Zeitintervall. Eine andere bekannte Lösung setzt voraus, daß vor dem Lesen oder Bewerten der Zustandsgrößen des ersten Schaltwerkes dessen weiterschaltender Takt gesperrt wird, um eine Änderung auszuschließen. Dabei tritt jedoch eine Vielzahl von möglichen Fehlerbedingungen auf. So kann z. B. einerseits ein Taktimpuls durch das Sperren so verkürzt werden, daß nicht alle Zustandsgrößen den richtigen Zustand erreichen, andererseits kann ein Taktimpuls in mindestens zwei Impulse aufgetrennt werden, so daß ein unbeabsichtigtes Weiterschalten des ersten Schaltwerkes eintreten kann. Ferner können Taktimpulse verloren gehen.

Als letzte Möglichkeit zum Verhindern der Übernahme bzw. Auswertung falscher Informationen sei das Abspeichern in einem Zwischenspeicher erwähnt, bevor das Lesen oder Bewerten der Zustandsgrößen des ersten Schaltwerks durchgeführt wird. Zu diesem Zweck wird der Zwischenspeicher von einem separaten Abspeichersignal, das die Übernahme der Zustandsgrößen des ersten Schaltwerks im Zwischenspeicher steuert, beaufschlagt. Diese Verfahren führt dann zu Fehlern, wenn sich die Zustandsgrößen des ersten Schaltwerks gerade während des Abspeicherns ändern und so ein ungültiger Wert übernommen wird.

Auch Kombinationen der oben geschilderten Lösungen führen nicht dazu, daß zu allen Zeitpunkten die Zustandsgrößen des ersten Schaltwerkes richtig übernommen, gelesen oder bewertet werden.

Aufgabe der vorliegenden Erfindung ist es, hier Abhilfe zu schaffen, und eine Anordnung anzugeben, bei der die Übernahme, bzw. Auswertung falscher Informationen bei voneinander unabhängigen digitalen Systemen ausgeschlossen ist.

Diese Aufgabe wird bei einer Anordnung der eingangs genannten Art erfindungsgemäß dadurch gelöst, daß eine kreuzgekoppelte Gatteranordnung aus mindestens zwei Gattern vorgesehen ist, bei der ein Eingang des ersten Gatters vom Taktsignal beaufschlagt ist, ein Eingang des zweiten Gatters vom Lesesignal beaufschlagt ist und am Ausgang des ersten Gatters ein, den Zwischenspeicher beaufschlagendes Übernahmesignal abnehmbar ist. Dadurch gelingt es bei Schaltwerken bzw. digitalen Systemen, deren zeitliches Verhalten zueinander asynchron ist und die jeweils über einen Ereignisimpuls, wie z. B. einen Taktimpuls oder ein Lesesignal steuerbar sind, eine Übernahme bzw. ein Lesen oder ein Bewerten der Zustandsgrößen des ersten Schaltwerkes im zweiten Schaltwerk zu beliebigen Zeitpunkten fehlerfrei zu ermöglichen.

Bei Verwendung von Schaltwerken mit kurzen Taktzeiten, ist es von Vorteil, daß das Zeitintervall zwischen dem Ende der Aktivphase eines Lesesignals und dem Anfang der Aktivphase des nächstfolgenden Lesesignals größer als die Summe aus der Zeitdauer der Aktivphase des am ersten Schaltwerkes anliegenden Taktsignals und der zum Übernehmen der Zustandsgrößen des ersten Schaltwerkes in den Zwischenspeicher notwendigen Übernahmezeit ist.

Damit diese Zeitbedingung nicht zu unnötig langen Wartezeiten für das Lesen, Bewerten oder Abspeichern führt, wird vorteilhafterweise das Taktsignal dem ersten Schaltwerk über eine Differenzierstufe zugeführt.

Ausgestaltungen der erfindungsgemäßen Anordnung sind in Unteransprüchen gekennzeichnet.

Die Erfindung wird im folgenden anhand der Figuren näher erläutert. Es zeigen :

die Fig. 1 bis 3 je ein Ausführungsbeispiel der erfindungsgemäßen Anordnung und

die Fig. 4 bis 7 Zeitabläufe der z. B. beim Ausführungsbeispiel nach Fig. 1 auftretenden Steuersignale.

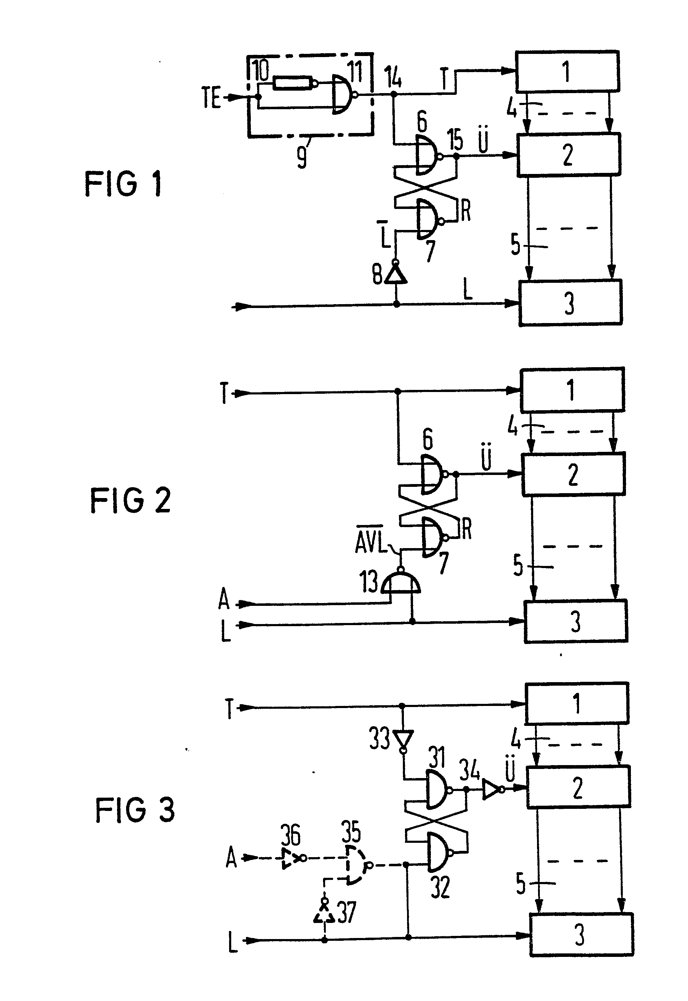

Das in der Fig. 1 gezeigte Ausführungsbeispiel für eine erfindungsgemäße Anordnung zeigt ein erstes Schaltwerk 1, z. B. einen Zähler, der über ein Taktsignal T weiterschaltbar ist. Die Zustandsgrößen bzw. Daten des ersten Schaltwerks 1 werden über die Datenleitungen 4 dem Zwischenspeicher 2 zugeführt. Der Zwischenspeicher 2 kann als Flip-Flop, z. B. als D-Flip-Flop, ausgeführt sein. Die Übernahme der Zustandsgrößen aus dem ersten Schaltwerk 1 in den Zwischenspeicher 2 ist in an sich bekannter Weise durch ein Übernahmesignal Ü steuerbar. Die im Zwischenspeicher 2 abgespeicherten Zustandsgrößen bzw. Daten sind über die Datenleitungen 5 einem zweiten Schaltwerk 3, z. B. einer Ablaufsteuerung, zuführbar. Das zweite Schaltwerk 3 wird von einem Lesesignal. L beaufschlagt, das das Lesen oder das Bewerten der im Zwischenspeicher 2 enthaltenen Zustandsgrößen im zweiten Schaltwerk 3 bewirkt.

Bei diesem und den weiteren Ausführungsbeispielen werden « einsaktive » Steuersignale angenommen, d. h. die Übernahme der Zustandsgrößen im Schaltwerk, Zwischenspeicher bzw. das Weiterschalten eines Schaltwerks erfolgt mit einem einen Einspegel aufweisenden Impuls, wobei die Bewertung in der Regel mit dem Ende der Aktivphase, d. h. mit der fallenden Flanke des Steuerimpulses, vorgenommen wird.

Um die Übernahme eindeutiger Informationen vom ersten Schaltwerk 1 in das zweite Schaltwerk 3 zu gewährleisten, ist eine aus einem ersten NOR-Gatter 6 und einem zweiten NOR-Gatter 7 bestehende Gatteranordnung vorgesehen, die kreuzgekoppelt ist, d. h. der Ausgang des ersten Gatters 6 beaufschlagt den ersten Eingang des zweiten Gatters 7, während der Ausgang des zweiten Gatters 7 den zweiten Eingang des ersten Gatters 6 beaufschlagt. Die kreuzgekoppelten Gatter 6, 7 werden in der Weise angeschlossen, daß das Taktsignal T am ersten Eingang des NOR-Gatters 6 anliegt, das Lesesignal L über den Inverter 8 invertiert am zweiten Eingang des zweiten NOR-Gatters 7 anliegt und das den Zwischenspeicher 2 beaufschlagende Übernahmesignal Ü am Ausgang des ersten Gatters 6 entnommen wird.

Die Schaltwerke 1 und 3 arbeiten zeitlich unabhängig, so daß das Taktsignal T und das Lesesignal L zueinander asynchron sind. Um die Aktivphase des Taktsignals T möglichst kurz zu halten, kann als Taktsignal gegebenenfalls der an und für sich zum Beaufschlagen des ersten Schaltwerks 1 vorhandene externe Takt TE dem ersten Schaltwerk 1 über eine, in der Fig. 1 gestrichelt gezeichnete Differenzierstufe 9 zugeführt werden. Die Differenzierstufe 9 wird vorteilhafterweise so ausgeführt, daß nur eine Flanke des externen Taktes TE einen als Taktsignal T verwerteten Impuls auslöst, so daß z. B. die von « 1 » auf « 0 » fallende Flanke des Signals TE differenziert wird und somit die Impulsdauer z. B. von Millisekunden auf Mikrosekunden verringert wird. Um eine entsprechende Verkürzung der Aktivphase des Taktimpulses T zu erreichen, kann die Differenzierstufe 9 z. B. in der Weise ausgeführt sein, daß das externe Taktsignal TE einerseits einer Verzögerungsstufe 10 und andererseits dem zweiten Eingang eines NOR-Gatters 11 zugeführt wird, der Ausgang der Verzögerungsstufe 10 invertiert dem ersten Eingang des NOR-Gatters 11 Zugeführt wird und das den ersten Eingang des ersten Gatters 6 und das erste Schaltwerk 1 beaufschlagende Taktsignal T dem Ausgang des NOR-Gatters 11 entnommen wird.

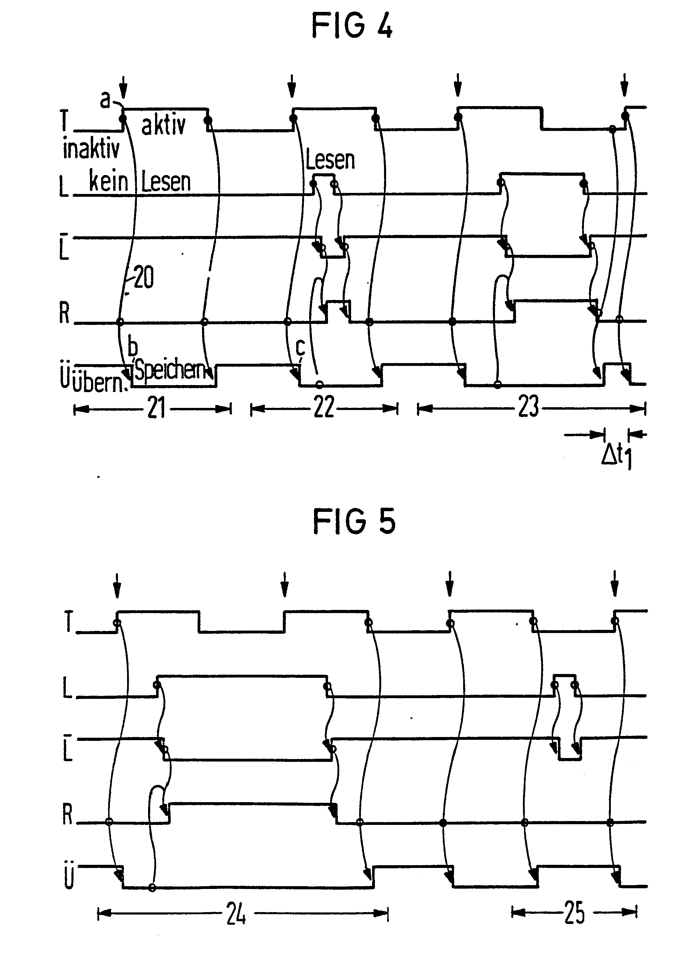

Das Verhalten einer erfindungsgemäßen Anordnung nach Fig. 1 wird nun anhand der Zeitdiagramme der Fig. 4 bis 7 erläutert. Die Zeitdiagramme zeigen den zeitlichen Verlauf des am Ausgang des Inverters 8 anliegenden invertierten Lesesignals $\overline{L}$, des am Ausgang des zweiten Gatters 7 anliegenden Rückkopplungssignals R und des Übernahmesignals Ü in Abhängigkeit vom Taktsignal T und zum in Verhältnis zum Taktsignal T zu unterschiedlichen Zeiten und mit unterschiedlichen Impulsdauern auftretenden Lesesignal L.

Im in der Fig. 4 gezeigten Fall 21 tritt kein Lesesignal L auf, das Signal $\overline{L}$ hat daher Einspegel, das Rückkopplungssignal R Nullpegel. Das Taktsignal T ist zunächst inaktiv und wird zum Zeitpunkt a aktiv, d. h. das erste Schaltwerk 1 wird zum Zeitpunkt a (Vorderflanke des Taktsignals T) weitergeschaltet. Das Übernahmesignal Ü ist bei inaktivem Signal T und inaktivem Signal R — wie durch den Pfeil 20 und die beiden kleinen Kreise angedeutet — aktiv, die Zustandsgrößen des ersten Schaltwerks 1 werden also in den Zwischenspeicher 2 übernommen. Zum Zeitpunkt b, der durch Gatterlaufzeiten bedingt hinter dem Zeitpunkt a liegt, werden vom Zwischenspeicher 2 keine Daten mehr übernommen, sondern die übernommenen Daten gespeichert. Ein Fehler bei der Informationsübernahme kann in diesem Fall nicht auftreten.

Im Falle 22 der Fig. 4 tritt ein Lesesignal L während der Aktivphase des Taktsignals T auf. Die zum Zeitpunkt c im Zwischenspeicher 2 abgespeicherten Daten werden fehlerfrei gelesen.

Im Fall 23 der Fig. 4 wird ebenfalls während der Aktivphase des Taktes T das Lesesignal L aktiv, es ist jedoch länger aktiv als der Steuertakt T. Dies kann dazu führen, daß die Zeitdauer $\Delta t_1$, während der die nächsten Zustandsgrößen vom ersten Schaltwerk 1 in den Zwischenspeicher 2 Übernommen werden, wegen der von Null verschiedenen, unterschiedlich langen Verzögerungs- und Schaltzeiten für die Übergänge von Einspegel nach Nullpegel und von Nullpegel nach Einspegel zu kurz für eine sichere Übernahme der Zustandsgrößen ist. Der in der Fig. 5 gezeigte Fall 24 entspricht dem Fall 23, jedoch dauert die Aktivphase des Lesesignals L bis in die nächste Aktivphase vom Taktsignal T an. In diesem Fall treten keine Probleme bei der Datenübernahme auf.

Im Fall 25 der Fig 5 wird das Lesesignal L während der inaktiven Phase des Taktsignales T aktiv, wobei keine Übernahmefehler auftreten können.

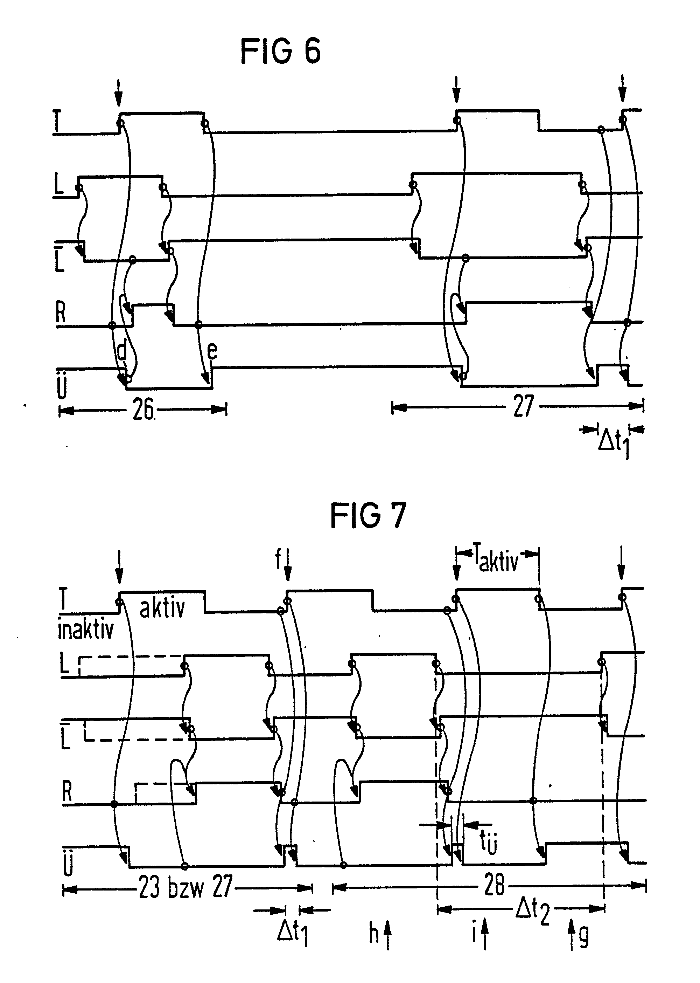

Im in der Fig. 6 gezeigten Falle 26 wird das Lesesignal L ebenfalls während der inaktiven Phase des Taktes T aktiv, jedoch reicht das Lesesignal L in die nächste aktive Phase des Taktes T hinein. Da die vom ersten Schaltwerk 1 übernommenen Zustandsgrößen vom Zeitpunkt d bis zum Zeitpunkt e gespeichert bleiben, tritt ebenfalls kein Fehler bei der Übernahme auf.

Der Fall 27 der Fig. 6 entspricht dem Fall 26, jedoch dauert die Aktivphase des Lesesignals L bis in die nächste Inaktivphase des Taktsignals T an. Wie im Falle 23 ist die Zeit $\Delta t_1$ zur Übernahme der Zustandsgrößen des ersten Schaltwerks 1 eventuell zu kurz.

Die kritischen Fälle 23 und 27 sind im linken Teil der Fig. 7 nochmals zusammengestellt, wobei die durchgezogenen Linien dem Fall 23 und die gestrichelten Linien dem Fall 27 entsprechen. Man erkennt, daß die kritische Zeit $\Delta t_1$ zur Übernahme der nächsten Zustandsgrößen aus dem ersten Schaltwerk 1 in den Zwischenspeicher 2 dann zu kurz wird, wenn die weiterschaltende Flanke (Vergl. Pfeil f) des Taktsignals T zu früh auftritt. Die Zeit $\Delta t_1$ ist also eventuell zu kurz für eine Übernahme des richtigen Wertes der Zustandsgrößen in den Zwischenspeicher 2, so daß zum Zeitpunkt h ein falscher Wert im Zwischenspeicher 2 gespeichert ist. Dieses Problem kann, wie im Fall 28 der Fig. 7 verdeutlicht, durch eine einzuhaltende Zeitbedingung gelöst werden, die den Abstand zwischen dem Ende einer Lese- bzw. Bewertungsoperation und dem beginn einer folgenden derartigen Operation betrifft. Wird nämlich die Zeitbedingung

$$\Delta t_2 > T_{aktiv} + t_{ü\ min}$$

eingehalten, wobei $\Delta t_2$ die Zeit zwischen dem Ende der Aktivphase des Lesesignals L und dem Anfang der nächsten Aktivphase des Lesesignals L, $T_{aktiv}$ die aktive Zeit des Taktsignals T, $t_{ü\ min}$ die durch Schaltungsparameter minimal benötigte Übernahmezeit zum Übernehmen der richtigen Zustandsgrößen des ersten Schaltwerks 1 in den Zwischenspeicher 2 bedeuten, so ist sichergestellt, daß vor einem erneuten Lesevorgang der richtige Wert der Zustandsgrößen des ersten Schaltwerks in den Zwischenspeicher Übernommen ist. Zum Zeitpunkt h bzw. i ist zwar gegebenenfalls ein falscher Wert im Zwischenspeicher 2 abgespeichert, durch die Zeitbedingung ist jedoch sichergestellt, daß zum Zeitpunkt g der richtige Wert Übernommen und anschließend gelesen wird.

Bei der Verwendung unabhängiger Mikrocomputer als Schaltwerke kann die Zeitbedingung für $\Delta t_2$ aufgrund der zeitlichen Bedingungen des Rechners der Befehlsabwicklung automatisch erfüllt sein. Geht man von einer Dauer von $T_{aktiv}$ v.1μs und von einer durch Schaltungsparameter bzw. Technologie bedingte Zeit von $t_{ü min}$ von 100 ns aus, so ist z. B. bei Mikrocomputern des Typs SAB 8085 - beispielsweise beschrieben in SIEMENS, User's Manual Sept. 1978, MCS - 85, Ord. No. B 2 010.101- die Zeitbedingung für $\Delta t_2$ automatisch erfüllt. Geht man von Mikrocomputern mit schnellerer Befehlsabwicklung, beispielsweise dem Typ SAB 8086 - z. B. beschrieben in SIEMENS, SAB 8086 Family User's Manual Oct. 1979, MCS-86, Ord. No. B/2184-101 - aus, so muß gegebenenfalls die Zeitbedingung für $\Delta t_2$ beachtet werden. Dies kann beispielsweise in der Weise geschehen, daß im Programm zusätzliche Befehle, z. B. No-Operation (NOP)-Befehle eingefügt werden.

Wird zum Austausch von Informationen zwischen zwei voneinander unabhängigen Schaltwerken 1 und 3 eine Anordnung vorgesehen, bei der zum Abspeichern im Zwischenspeicher 2 ein separates, vom Lesesignal L unabhängiges, beispielsweise software-/oder hardwaremäßig in an sich bekannter Weise z. B. durch einen Mikrocomputer erzeugtes Abspeichersignal A verwendet, so kann die in der Fig. 1 gezeigte Ausführungsform der erfindungsgemäßen Anordnung gemäß Fig. 2 modifiziert werden. Gemäß dem in der Fig. 2 gezeigten Ausführungsbeispiel, bei dem im Vergleich zu Fig. 1 gleiche Bauelemente mit gleichen Bezugszeichen sind, wird anstelle des in Fig. 1 verwendeten Inverters 8 ein NOR-Gatter 13 verwendet, dessen erster Eingang vom Abspeichersignal A und dessen zweiter Eingang vom Lesesignal L ignaignbeaufschlagt wird. Der Ausgang des Gatters 13 wird analog zu dem des Inverters 8 mit dem zweiten Eingang des zweiten NOR-Gatters 7 verbunden. Der zeitliche Abstand zwischen dem Ende einer Lese- oder Abspeicheroperation und dem Beginn einer folgenden derartigen Operation muß wiederum so gewählt werden, daß er größer ist als die Summe der aktiven Phase eines Steuertaktes T und der minimalen Übernahmezeit $t_{ü min}$. Damit diese Zeitbedingung nicht zu unnötig langen Wartezeiten für das Lesen, Bewerten oder Abspeichern führt, muß wie im Falle des Ausführungsbeispieles der Fig. 1 die Aktivphase des Taktes möglichst kurz sein, was gegebenenfalls entsprechend der Fig. 1 durch Differentiation des externen weiterschaltenden Taktes TE erreicht werden kann.

Die Ausführung einer erfindungsgemäßen kreuzgekoppelten Gatteranordnung ist nicht auf eine in den Fig. 1 und 2 gezeigte, aus NOR-Gattern aufgebaute Anordnung beschränkt. Ein NAND-Gatter verwendendes weiteres Ausführungsbeispiel zeigt die Fig. 3. Die kreuzgekoppelte Gatteransordnung nach Fig. 3 besteht aus einem ersten NAND-Gatter 31, dessen Ausgang einerseits mit dem ersten Eingang eines zweiten NAND-Gatters 32 verbunden ist und andererseits über einen Inverter 34, das Übernahmesignal Ü führend, den Zwischenspeicher 2 beaufschlagt. Das gegebenenfalls durch Differentiation des externen Taktes TE gewonnene, das erste Schaltwerk 1 weiterschaltende Taktsignal T beaufschlagt über den Inverter 33 den ersten Eingang des ersten NAND-Gatters 31, während das, das zweite Schaltwerk 3 steuernde Lesesignal L den zweiten Eingang des zweiten NAND-Gatters 32 beaufschlagt, dessen Ausgang mit dem zweiten Eingang des ersten NAND-Gatters 31 verbunden ist.

Wird zum Austausch von Informationen zwischen zwei voneinander unabhängigen Schaltwerken 1 und 3 eine Anordnung vorgesehen, bei der zum Abspeichern im Zwischenspeicher 2 ein separates, von Lesesignal L unabhängiges, beispielsweise software-/oder hardwaremäßig in an sich bekannter Weise z. B. durch einen Mikrocomputer erzeugtes Abspeichersignal A verwendet, so kann die in der Fig. 3 gezeigte Ausführungsform der erfindungsgemäßen Anordnung mit den gestrichelt gezeichneten Elementen 35, 36, 37 modifiziert werden. Anstelle der direkten Verbindung des Lesesignals L mit dem zweiten Eingang des NAND-Gatters 32 wird ein NAND-Gatter 35 verwendet, dessen erster Eingang vom über den Inverter 36 invertierten Abspeichersignal A und dessen zweiter Eingang vom über den Inverter 37 invertierten Lesesignal L beaufschlagt wird. Der Ausgang des Gatters 35 wird mit dem zweiten Eingang des zweiten NAND-Gatters 32 verbunden. Der zeitliche Abstand zwischen dem Ende einer Lese- oder Abspeicheroperation und dem Beginn einer folgenden derartigen Operation muß so gewählt werden, daß er größer ist als die Summe der aktiven Phase eines Steuertaktes T und der minimalen Übernahmezeit $t_{ü min}$.

Für die Funktion des in der Fig. 3 gezeigten Ausführungsbeispiels gilt das zur Fig. 1 und Fig. 2 Gesagte entsprechend. Werden nicht - wie in den Fig. 1 bis 3 angenommen - einsaktive Steuersignale verwendet, so können die in den gezeigten Ausführungsbeispielen verwendeten Anordnungen durch entsprechende Zwischenschaltung bzw. durch entsprechendes Weglassen von Invertern ergänzt werden. Bei Verwendung eines nullaktiven Taktsignals T kann z. B. in der Fig. 1 zwischen dem Punkt 14 und dem ersten Eingang des Gatters 6 ein Inverter geschaltet werden. Bei Verwendung eines nullaktiven Übernahmesignals Ü kann beispielsweise zwischen den Punkt 15 und dem Zwischenspeicher 2 ein Inverter geschaltet werden, während bei Verwendung eines nullaktiven Lesesignals L der Inverter 8 entfallen kann.

## Patentansprüche

1. Anordnung zum Auslesen eindeutiger Informationen aus einem digitalen Schaltwerk bei zueinander asynchronen Steuersignalen für das Weiterschalten des Schaltwerks und das Übernehmen der Informationen aus einem weiteren Schaltwerk, bestehend aus einem ersten Schaltwerk (1), das von einem, das erste Schaltwerk (1) weiterschaltenden Signal (T) beaufschlagbar ist, einem Zwischenspeicher (2), in dem die Zustandsgrößen des ersten Schaltwerks (1) zwischenspeicherbar sind und einem zweiten Schaltwerk (3), das von einem Lesesignal (L) beaufschlagbar ist und in das die Zustandsgrößen des Zwischenspeichers (2) übernehmbar sind, dadurch gekennzeichnet, daß eine kreuzgekoppelte Gatteranordnung aus mindestens zwei Gattern (6, 7) vorgesehen ist, bei der ein Eingang des ersten Gatters (6) vom Taktsignal (T) beaufschlagt ist, ein Eingang des zweiten Gatters (7) vom Lesesignal (L) beaufschlagt ist und am Ausgang des ersten Gatters (6) ein, den Zwischenspeicher (2) beaufschlagendes Übernahmesignal (Ü) abnehmbar ist.

2. Anordnung nach Anspruch 1, dadurch gekennzeichnet, daß das Zeitintervall zwischen dem Ende der Aktivphase eines Lesesignals (L) und dem Anfang der Aktivphase des nächstfolgenden Lesesignals (L) größer als die Summe aus der Zeitdauer der Aktivphase des am ersten Schaltwerk (1) anliegenden Taktsignals (T) und der zum Übernehmen der Zustandsgrößen des ersten Schaltwerks (1) in den Zwischenspeicher (2) notwendigen Übernahmezeit ist.

3. Anordnung nach Anspruch 1 oder 2, dadurch gekennzeichnet, daß das Taktsignal (T) dem ersten Schaltwerk (1) über eine Differenzierstufe (9) zugeführt ist.

4. Anordnung nach einem der Ansprüche 1 bis 3, dadurch gekennzeichnet, daß bei Verwendung eines Abspeichersignals (A), das als Steuersignal für die Übernahme von Zustandsgrößen in einen Zwischenspeicher dient, das Abspeichersignal (A) dem zweiten Eingang des zweiten Gatters (7) zugeführt ist.

5. Anordnung nach einem der Ansprüche 1 bis 4, dadurch gekennzeichnet, daß das Taktsignal (T) den ersten Eingang eines ersten NOR-Gatters (6) beaufschlagt, dessen zweiter Eingang mit dem Ausgang eines zweiten NOR-Gatters (7) verbunden ist und an dessen Ausgang das Übernahmesignal (Ü) entnehmbar ist, daß das Übernahmesignal (Ü) einerseits den Zwischenspeicher (2) und andererseits den ersten Eingang des zweiten NOR-Gatters (7) beaufschlagt und daß das invertierte Lesesignal (L) den zweiten Eingang des zweiten NOR-Gatter (7) beaufschlagt.

6. Anordnung nach einem der Ansprüche 1 bis 5, daduch gekennzeichnet, daß das Abspeichersignal (A) dem ersten Eingang eines weiteren NOR-Gatters (13), dessen zweiter Eingang vom Lesesignal (L) beaufschlagt wird und dessen Ausgang mit dem zweiten Eingang des zweiten NOR-Gatters (7) verbunden ist, zugefürt ist.

7. Anordnung nach einem der Ansprüche 1 bis 4, dadurch gekennzeichnet, daß das invertierte Taktsignal (T) den ersten Eingang eines ersten NAND-Gatters (31) beaufschlagt, dessen zweiter Eingang mit dem Ausgang eines zweiten NAND-Gatters (32) verbunden ist und dessen Ausgang einerseits über einen Inverter (34) den Zwischenspeicher (2) beaufschlagt und andererseits mit dem ersten Eingang des zweiten NAND-Gatters (32) verbunden ist, und daß das Lesesignal (L) den zweiten Eingang des zweiten NAND-Gatters (32) beaufschlagt.

8. Anordnung nach einem der Ansprüche 1 bis 7, dadurch gekennzeichnet, daß das Abspeichersignal (A) invertiert dem ersten Eingang eines weiteren NAND-Gatters (35), dessen zweiter Eingang vom invertierten Lesesignal (L) beaufschlagt wird und dessen Ausgang mit dem zweiten Eingang des zweiten NAND-Gatters (32) verbunden ist, zugeführt ist.

## Claims

1. An arrangement for reading non-ambiguous items of information from a digital sequential logic system, in the case of control signals which are asynchronous to one another, for stepping-on the sequential logic system and transferring the items of information from a further sequential logic system, comprising a first sequential logic system (1) which can be supplied with a signal (T) which steps on the first sequential logic system (1), an intermediate store (2) in which the status variables of the first sequential logic system (1) can be intermediately stored and a second sequential logic system (3) which can be supplied with a read signal (L) and into which the status variables of the intermediate store (2) can be transferred, characterised in that a cross-coupled gate arrangement is provided comprising at least two gates (6,7), where an input of the first gate (6) is supplied with the clock signal (T), an input of the second gate (7) is supplied with the read signal (L), and a transfer signal (Ü), which is supplied to the intermediate store (2), can be obtained from the output of the first gate (6).

2. An arrangement as claimed in claim 1, characterised in that the interval of time between the end of the active phase of a read signal (L) and the start of the active phase of the next read signal (L) is greater than the sum of the duration of the active phase of the clock signal (T) connected to the first sequential logic system (1), and the transfer time required to transfer the status variables of the first sequential logic system (1) into the intermediate store (2).

3. An arrangement as claimed in claim 1 or claim 2, characterised in that the clock signal (T) is supplied to the first sequential logic system (1) via a differentiator stage (9).

4. An arrangement as claimed in one of the claims 1 to 3, characterised in that when a store instruction signal (A) is used, which serves as control signal for the transfer of the status variables into an intermediate store, the store instruction signal (A) is supplied to the second imput of the second gate (7).

5. An arrangement as claimed in one of the claims 1 to 4, characterised in that the clock signal (T) is supplied to the first input of a first NOR-gate (6), whose second input is connected to the output of a second NOR-gate (7) and from whose output the transfer signal (Ü) can be obtained, that the transfer signal (Ü) is supplied on the one hand to the intermediate store (2) and on the other hand to the first input of the second NOR-gate (7), and that the inverted read signal (L) is supplied to the second input of the second NOR-gate (7).

6. An arrangement as claimed in one of the claims 1 to 5, characterised in that the store instruction signal (A) is supplied to the first input of a further NOR-gate (13), whose second input is supplied with the read signal (L) and whose output is connected to the second input of the second NOR-gate (7).

7. An arrangement as claimed in one of the claims 1 to 4, characterised in that the inverted clock signal (T) is supplied to the first input of a first NAND-gate (31) whose second input is connected to the output of a second NAND-gate (32) and whose output on the one hand leads via an inverter (34) to the intermediate store (2) and on the other hand is connected to the first input of the second NAND-gate (32), and that the real signal (L) is supplied to the second input of the second NAND-gate (32).

8. An arrangement as claimed in one of the claims 1 to 7, characterised in that the store instruction signal (A) is fed in inverted form to the first input of a further NAND-gate (35), whose second input is supplied with the inverted read signal (L) and whose output is connected to the second input of the second NAND-gate (32).

**Revendications**

1. Montage pour lire des informations univoques dans un dispositif de commutation numérique, avec utilisation de signaux de commande mutuellement asynchrones pour l'avancement ou le séquencement du dispositif de commutation et la réception des informations d'un autre dispositif de commutation, montage qui comprend un premier dispositif de commutation (1), auquel peut être appliqué un signal (T) produisant l'avancement du premier dispositif de commutation, une mémoire tampon (2), dans laquelle peuvent être mémorisées temporairement les grandeurs d'état du premier dispositif de commutation (1), et un second dispositif de commutation (3), auquel peut être appliqué un signal de lecture (L) et dans lequel peuvent être reçues les grandeurs d'état de la mémoire tampon (2), caractérisé en ce qu'il comprend un circuit de portes à couplage en croix, constitué d'au moins deux portes (6, 7), dans lequel une entrée de la première porte (6) est alimentée par le signal de rythme (T), une entrée de la seconde porte (7) est alimentée pour le signal de lecture (L) et un signal de transfert (Ü), agissant sur la mémoire tampon (2), peut être prélevé à la sortie de la première porte (6).

2. Montage selon la revendication 1, caractérisé en ce que l'intervalle de temps entre la fin de la phase active d'un signal de lecture (L) et le début de la phase active du signal de lecture (L) suivant, est plus grand que la somme de la durée de la phase active du signal de rythme (T), appliqué au premier dispositif de commutation (1), et du temps de transfert nécessaire à la réception des grandeurs d'état du premier dispositif de commutation (1) dans la mémoire tampon (2).

3. Montage selon la revendication 1 ou 2, caractérisé en ce que le signal de rythme (T) est appliqué au premier dispositif de commutation (1) à travers un étage différenciateur (9).

4. Montage selon une des revendications 1 à 3, caractérisé en ce que, en cas d'utilisation d'un signal de mémorisation (A), qui sert de signal de commande pour la réception de grandeurs d'état dans une mémoire tampon, le signal de mémorisation (A) est appliqué à la seconde entrée de la seconde porte (7).

5. Montage selon une des revendications 1 à 4, caractérisé en ce que le signal de rythme (T) agit sur la première entrée d'une première porte NON-OU (6) dont la seconde entrée est connectée à la sortie d'une seconde porte NON-OU (7) et sur la sortie de laquelle peut être prélevé le signal de transfert (Ü), que le signal de transfert (Ü) agit d'une part sur la mémoire tampon (2) et d'autre part sur la première entrée de la seconde porte NON-OU (7) et que le signal de lecture (L) inversé agit sur la seconde entrée de la seconde porte NON-OU (7).

6. Montage selon une des revendications 1 à 5, caractérisé en ce que le signal de mémorisation (A) est appliqué à la première entrée d'une porte NON-OU supplémentaire (13) dont la seconde entrée est alimentée par le signal de lecture (L) et dont la sortie est connectée à la seconde entrée de la seconde porte NON-OU (7).

7. Montage selon une des revendications 1 à 4, caractérisé en ce que le signal de rythme (T) inversé agit sur la première entrée d'une première porte NON-ET (31) dont la seconde entrée est connectée à la sortie d'une seconde porte NON-ET (32) et dont la sortie agit d'une part, à travers un inverseur (34), sur la mémoire intermédiaire (2) et est connectée d'autre part à la première entrée de la seconde porte NON-ET (32) et que le signal de lecture (L) agit sur la seconde entrée de la seconde porte NON-ET (32).

8. Montage selon une des revendications 1 à 7, caractérisé en ce que le signal de mémorisation (A) est appliqué à l'état inversé à la première entrée d'une porte NON-ET supplémentaire (35) dont la seconde entrée est alimentée par le signal de lecture (L) inversé et dont la sortie est connectée à la seconde entrée de la seconde porte NON-ET (32).

FIG 1

FIG 2

FIG 3

## FIG 4

## FIG 5

# FIG 6

26    27    Δt₁

# FIG 7

23 bzw 27    28    Δt₁    h    i    Δt₂    g